# FASCICULE DE BREVET EUROPEEN

(11) **EP 0 739 460 B1**
(45) Date de publication et mention de la délivrance du brevet: **10.09.1997**
(21) Numéro de dépôt: 95904599.8
(22) Date de dépôt: 22.12.1994
(51) Int. Cl.: F16D 66/02

(54) **FREIN A DISQUE A SECURITE ACCRUE**
SCHEIBENBREMSE MIT ERHÖHTER SICHERHEIT
DISC BRAKE WITH IMPROVED SAFETY

(30) Priorité: 19.01.1994 FR 9400547
(43) Date de publication de la demande: 30.10.1996
(73) Titulaire: BOSCH SISTEMAS DE FRENADO, S.L., 28037 Madrid (ES)
(72) Inventeur: BACARDIT SIMON, Juan, AlliedSignal Europe, F-93700 Drancy (FR); CAMPS OLIVERAS, Josep, AlliedSignal Europe, F-93700 Drancy (FR)
(74) Mandataire: Bentz, Jean-Paul
(86) Numéro de dépôt international: FR9401524
(87) Numéro de publication internationale: WO9520109

(56) Documents cités:
- EP-A- 0 168 303
- EP-A- 0 381 947
- DE-A- 3 313 078
- FR-A- 2 485 132
- US-A- 3 975 706

## Description

La présente invention concerne un frein à disque pour véhicule à moteur, comprenant :
- deux éléments de frein mobiles l'un par rapport à l'autre, dont l'un est un étrier chevauchant un disque de frein, et dont l'autre est une chape fixée au véhicule;
- des moyens de serrage comprenant un cylindre solidaire de l'étrier et présentant en regard du disque une ouverture fermée par un piston ;
- des moyens de guidage permettant un coulissement de l'étrier par rapport à la chape lors d'un actionnement des moyens de serrage, ces moyens de guidage comprenant au moins une colonnette de guidage fixée à l'un des éléments de frein, et un alésage formé dans l'autre élément de frein et dans lequel coulisse la colonnette;
- deux patins de friction dont le premier est disposé entre le piston et une première face du disque, et le second entre une seconde face du disque et une mâchoire de l'étrier, ces patins étant appliqués sur le disque lors de l'actionnement des moyens de serrage; et
- au moins un indicateur d'usure électrique pour surveiller l'état d'usure de l'un au moins des patins, cet indicateur comportant deux parties dont l'une au moins est déplacée par rapport à l'autre lors de l'actionnement des moyens de serrage, et comprenant des moyens pour faire varier un paramètre électrique, de façon sensiblement continue, en fonction de la position relative occupée par les première et seconde parties de cet indicateur.

Un frein de ce type est par exemple illustré par les documents FR-A-2 485 132 et EP-A-0 168 303.

En pratique, on connaît aujourd'hui essentiellement trois types d'indicateurs d'usure, à savoir les indicateurs électriques liés au patins, les indicateurs sonores également liés aux patins, et les indicateurs électriques, tels que ceux que décrivent les documents précédemment mentionnés, qui sont prévus sur le frein lui-même.

Quelque soit leur mode de réalisation, de tels indicateurs d'usure sont soumis à un risque de défaillance élevé, tenant au caractère très hostile de l'environnement dans lequel il doit travailler.

Dans ces conditions, il existe toujours un risque non négligeable pour qu'une usure même importante des patins de frein ne soit signalée par aucun signal malgré la présence d'un indicateur d'usure, ce dernier ayant toujours pu tomber en panne.

De plus, un indicateur d'usure tel que celui que décrit le document EP-A-0 168 303 suppose l'emploi de bobinages et de matériaux magnétiquement appropriés qui présentent un encombrement et un coût additionnel non négligeables.

La présente invention se situe dans ce contexte et a pour but de proposer un frein à disque dans lequel le risque qu'une usure importante des patins passe inaperçue soit sensiblement réduit, mais sans être soumis à des contraintes importantes en termes de coût et d'encombrement.

A cette fin, le frein de l'invention est essentiellement caractérisé en ce que l'indicateur d'usure comprend un capteur capacitif à deux électrodes, chacune des parties de cet indicateur constituant une électrode correspondante de ce capteur, en ce que l'une des électrodes du capteur capacitif est montée coulissante dans l'autre, ces électrodes participant à la constitution desdits moyens de guidage et présentant une zone de recouvrement variable, et en ce que ce frein comprend en outre des moyens de surveillance propres à mesurer périodiquement le paramètre électrique, à en comparer la valeur à au moins un seuil prédéterminé, et à délivrer un signal de défaillance lorsque le résultat de la comparaison est différent d'un résultat normal préalablement enregistré.

Les moyens de surveillance comprennent avantageusement un circuit électronique sensible à la capacité entre les deux électrodes, solidaire de l'une des parties de l'indicateur et propre à produire, en tant que signal de sortie, un signal modulé au cours du temps en fonction de la valeur de la capacité formée entre les électrodes du capteur.

Dans un mode de réalisation très efficace, le circuit électronique produit, en tant que signal de sortie, une modulation d'un signal d'energie électrique qu'il reçoit en provenance d'une source d'alimentation.

Par ailleurs, l'une des électrodes de l'indicateur d'usure peut par exemple comprendre la colonnette ou une électrode axiale solidaire du cylindre, l'autre électrode comprenant, dans ce dernier cas, un manchon solidaire du piston.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe partielle d'un frein à disque traditionnel;
- la figure 2 est une vue en coupe d'un capteur capacitif utilisable dans un frein conforme à l'invention;
- la figure 3 est une vue en coupe suivant la ligne III-III de la figure 2;
- la figure 4 est une vue en coupe semblable à la figure 2;
- la figure 5 est une vue en coupe semblable à la figure 2;
- la figure 6 est une vue en coupe partielle d'un frein conforme à un autre mode de réalisation de l'invention;
- la figure 7 est une vue en coupe partielle d'un frein conforme à un encore autre mode de réalisation de l'invention;
- la figure 8 est le schéma d'un circuit électronique utilisable pour la mise en oeuvre de l'invention;
- la figure 9, formée des figures 9a à 9f, représente des formes d'onde observables en différents points du circuit de la figure 8 ; et
- la figure 10 est une vue de dessus et en coupe partielle d'un frein conforme à l'invention.

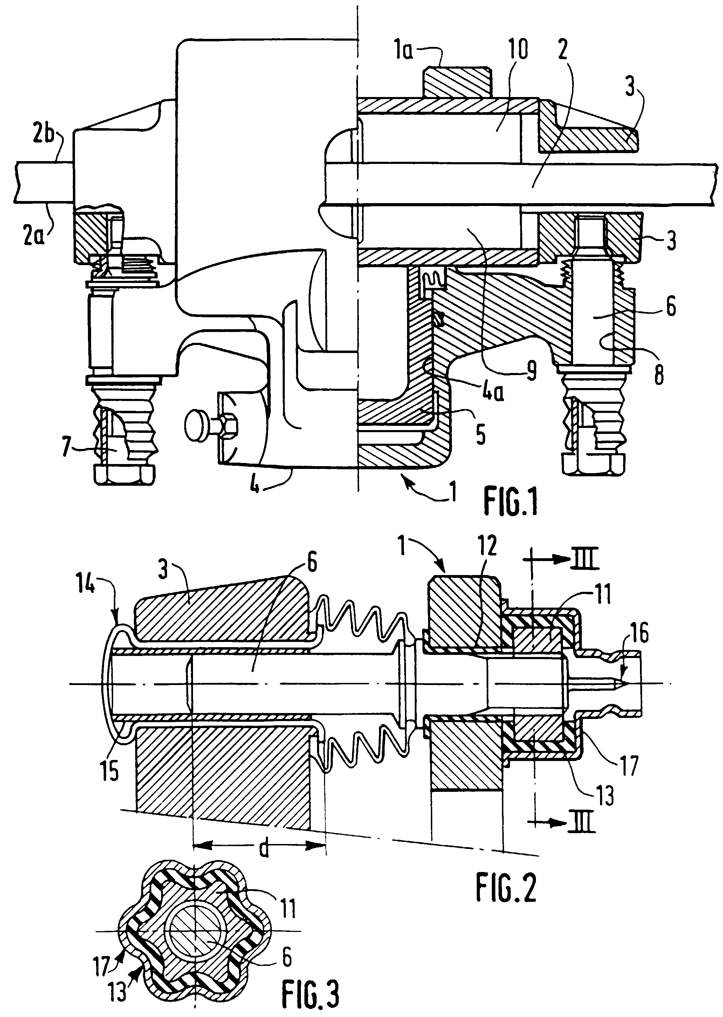

Comme le montre la figure 1, la présente invention concerne essentiellement un frein à disque pour véhicule à moteur, comprenant :
- deux éléments de frein mobiles l'un par rapport à l'autre, dont l'un est un étrier 1 chevauchant un disque de frein 2, et dont l'autre est une chape 3 fixée au véhicule;
- des moyens de serrage comprenant un cylindre 4 solidaire de l'étrier 1 et présentant en regard du disque une ouverture 4a fermée par un piston 5;
- des moyens de guidage permettant un coulissement de l'étrier par rapport à la chape lors d'un actionnement des moyens de serrage, ces moyens de guidage comprenant au moins une colonnette de guidage, telle que 6 et 7, fixée à l'un des éléments de frein, et un alésage 8 formé dans l'autre élément de frein et dans lequel coulisse la colonnette 6; et
- deux patins de friction 9, 10 dont le premier 9 est disposé entre le piston 5 et une première face 2a du disque, et le second 10 entre une seconde face 2b du disque et une mâchoire la de l'étrier, ces patins étant appliqués sur le disque lors de l'actionnement des moyens de serrage.

L'invention a pour but de doter un tel frein d'un indicateur d'usure électrique permettant de surveiller l'état d'usure de l'un au moins des patins et ceci avec une grande sécurité de fonctionnement.

Globalement, l'indicateur d'usure comporte, de façon connue en soi, deux parties dont l'une au moins est déplacée par rapport à l'autre lors de l'actionnement des moyens de serrage du frein, cet indicateur d'usure comprenant des moyens pour faire varier un paramètre électrique, de façon sensiblement continue, en fonction de la position relative occupée par les première et seconde parties de cet indicateur.

Selon l'invention, illustrée aux figures 2 à 8, l'indicateur d'usure comprend un capteur capacitif à deux électrodes, chacune des parties de cet indicateur constituant une électrode correspondante de ce capteur.

Comme le montre la figure 2, une première électrode de ce capteur peut être essentiellement constituée par la colonnette 6, représentée sur cette figure comme étant rendue solidaire de l'étrier 1 au moyen d'un écrou 11, tout en étant galvaniquement isolée de cet étrier par une gaine isolante 12 et par une pièce isolante 13 entourant l'écrou 11.

La colonnette coulisse par exemple dans un manchon de guidage 14 qui est inséré dans la chape 3, ce manchon 14 et la colonnette 6 étant isolés l'un de l'autre grâce à une seconde gaine isolante 15.

Par ailleurs, un premier contact électrique 16, susceptible d'être connecté à une source de potentiel variable, est relié à la colonnette 6, et un second contact 17 est galvaniquement relié, par l'intermédiaire de l'étrier 1, à la chape 3, qui constitue la seconde électrode du capteur capacitif, et est connectée au potentiel de masse du véhicule.

Dans ces conditions, et comme le comprendra aisément l'homme de l'art à la lecture de la présente description interprétée au moyen des dessins, la capacité électrique observable entre les contacts 16 et 17 comprend une capacité de valeur fixe formée par le montage de la colonnette sur l'étrier 1, et une capacité de valeur variable dépendant de la longueur de recouvrement **d** entre la colonnette 6 et la chape 3.

En conséquence, à chaque position relative de la chape et de la colonnette, donc à chaque position relative de la chape et de l'étrier, correspond une valeur spécifique de la capacité observable entre les contacts 16 et 17, cette valeur variant continûment au cours du déplacement relatif de la chape et de l'étrier.

L'indicateur d'usure de l'invention comprend par ailleurs des moyens de surveillance, qui seront détaillés ultérieurement, et qui sont propres à mesurer périodiquement la capacité entre les contacts 16 et 17, à en comparer la valeur à au moins un seuil prédéterminé, et à délivrer un signal de défaillance lorsque le résultat de la comparaison est différent d'un résultat normal préalablement enregistré.

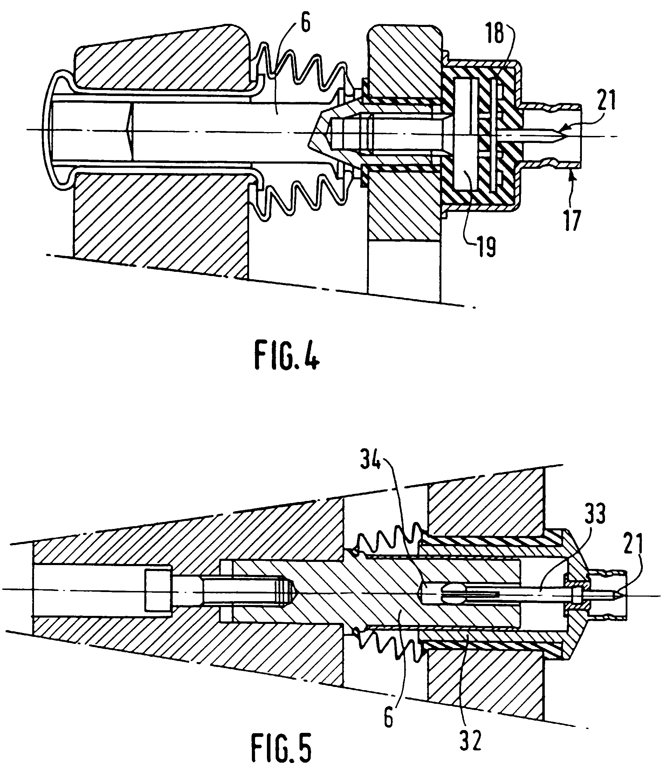

Ces moyens de surveillance comprennent, dans le mode de réalisation de la figure 4, un circuit électronique 18 sensible à la capacité entre les deux électrodes, solidaire de l'une des parties de l'indicateur d'usure et propre à produire, en tant que signal de sortie, un signal modulé au cours du temps en fonction de la valeur de la capacité formée entre les électrodes du capteur.

En effet, bien que la mise en oeuvre de l'invention selon le mode de réalisation de la figure 2 soit tout à fait possible, elle est rendue délicate par l'existence de capacités parasites qu'introduisent notamment les conducteurs destinés à relier les contacts 16 et 17 aux moyens de surveillance.

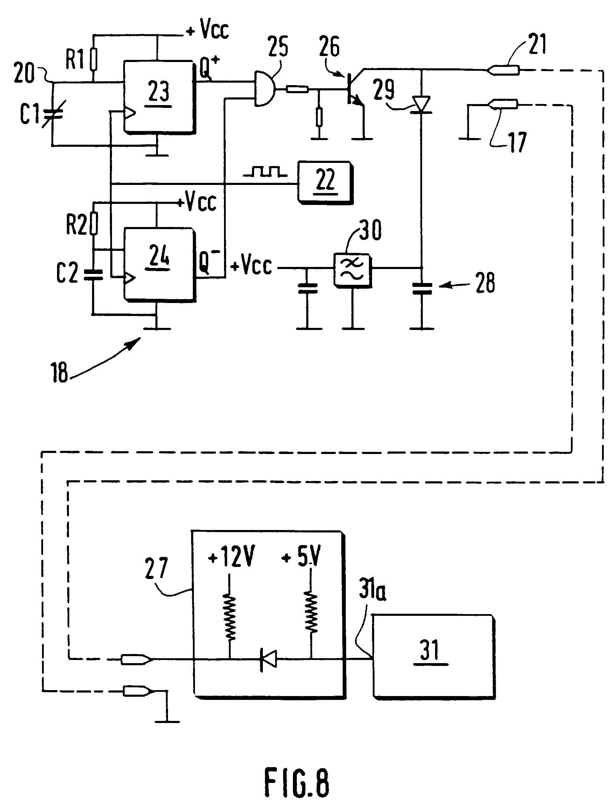

Il est donc préférable de mesurer sur place la capacité entre les contacts 16 et 17, comme le montre la figure 4 dans laquelle le circuit électronique 18 est rendu mécaniquement solidaire de la colonnette 6 par l'intermédiaire de la vis 19, ce circuit ayant une borne de mesure 20 (figure 8) galvaniquement reliée à cette colonnette, une borne de potentiel actif reliée au contact central 21, et une borne de masse reliée au contact 17.

La figure 8 illustre, dans sa partie supérieure, un schéma possible pour le circuit électronique 18.

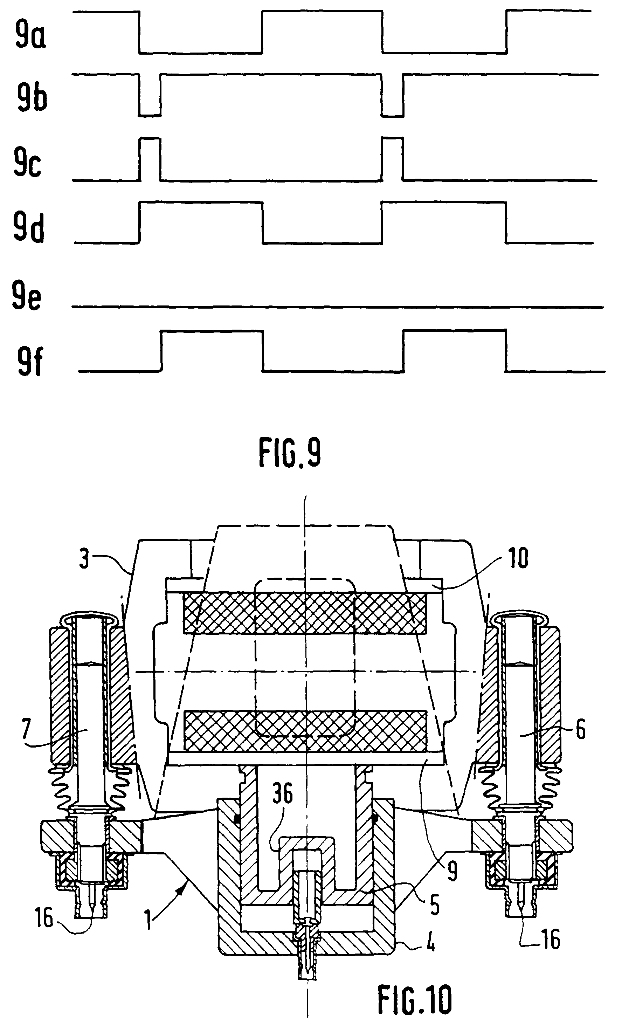

Ce dernier comprend essentiellement un oscillateur 22 délivrant un signal pulsé symétrique, visible sur la figure 9a, à deux multivibrateurs monostables 23 et 24.

Ces multivibrateurs sont respectivement reliés à des résistances R1 et R2 et à des capacités C1 et C2, la capacité C1 étant celle du capteur capacitif précédemment décrit, et la capacité C2 étant une capacité de référence.

Dans ces conditions, les multivibrateurs 23 et 24 délivrent sur leur sorties respectives Q+ et Q- des signaux modulés en fonction du temps, les impulsions produites par le multivibrateur 23 ayant une durée représentative de la valeur de la capacité C1 et les impulsions produites par le multivibrateur 24 servant de référence et permettant de s'affranchir notamment de l'existence de capacités parasites et des dérives des composants électroniques en fonction du temps ou de la température.

Plus précisément, le signal produit par le multivibrateur 24 est représenté sur la figure 9b, tandis que la figure 9c illustre le signal produit par le multivibrateur 23 lorsque la capacité C1 est minimale, et que la figure 9d illustre le signal produit par le multivibrateur 23 lorsque la capacité C1 est maximale.

Les signaux de sortie des multivibrateurs 23 et 24 sont combinés par la porte logique ET 25, qui délivre un signal de sortie représenté à la figure 9e pour des signaux d'entrée correspondant à ceux des figures 9b et 9c, et un signal de sortie représenté à la figure 9f pour des signaux d'entrée correspondant à ceux des figures 9b et 9d.

Le signal de sortie de la porte 25 est délivré au transistor 26 dont la fonction est de court-circuiter les bornes 21 et 17 lorsqu'il est activé.

Comme le montre par ailleurs la figure 8, ces bornes 21 et 17 sont reliées à une source 27 de puissance électrique continue, cette puissance se trouvant donc modulée en fonction du temps par le transistor 26.

L'énergie reçue par le circuit 18 en provenance de la source 27 est stockée par le circuit 18 dans une capacité d'entrée 28 à travers une diode 29, la capacité 28 étant reliée un filtre passe-bas 30 chargé de délivrer une tension régulée Vcc aux composants du circuit 18.

Comme le montre encore la figure 8, les moyens de surveillance comprennent également un microprocesseur 31, ou tout autre moyen équivalent, pour achever l'exploitation de l'information que porte la valeur variable de la capacité C1.

En l'occurrence, le microprocesseur 31 comporte une entrée 3 la reliée à la source de puissance électrique 27, celle-ci comportant une diode connectée entre deux sources de tension pour résoudre un éventuel problème d'adaptation de niveau sur l'entrée 31a.

Grâce à ce montage, le microprocesseur est en mesure de recevoir le signal de sortie de la porte ET 25, d'en évaluer périodiquement la durée en la comparant à celle de son horloge interne, et d'en déduire, par exemple en consultant une table de correspondance préalablement mémorisée, la valeur de la capacité C1 ou la position relative de la colonnette 6 et de l'étrier.

Dans ces conditions, le microprocesseur 31 peut aisément comparer la valeur mesurée de la capacité C1 à des valeurs minimale et maximale correspondant à des limites de fonctionnement normal autorisé, de manière à pouvoir délivrer un signal de défaillance lorsque le résultat de la comparaison montre que la valeur mesurée est en dehors des valeurs limites.

Il est cependant également possible de mémoriser, au fur et à mesure de leur acquisition, les plus basses valeurs mesurées de la capacité C1, par exemple pour fournir au conducteur du véhicule, par extrapolation des valeurs mesurées, une indication sur la nécessité future de changer les patins de friction.

En cas de panne du capteur capacitif, par exemple dû à un court-circuit entre la colonnette et l'étrier, la capacité mesurée par le microprocesseur 31 montre une valeur aberrante, de sorte que le microprocesseur est encore en mesure de délivrer un signal de défaillance.

La figure 5 montre l'une des variantes de réalisation possibles du capteur capacitif, dans laquelle la capacité variable est réalisée par la colonnette 6 d'une part, et par un manchon conducteur 32 d'autre part, chacun de ces éléments étant galvaniquement isolé de l'autre et du reste du frein, et le contact actif 21 étant relié à la colonnette grâce à une broche conductrice élastique 33 coulissant dans un alésage axial 34 de cette colonnette.

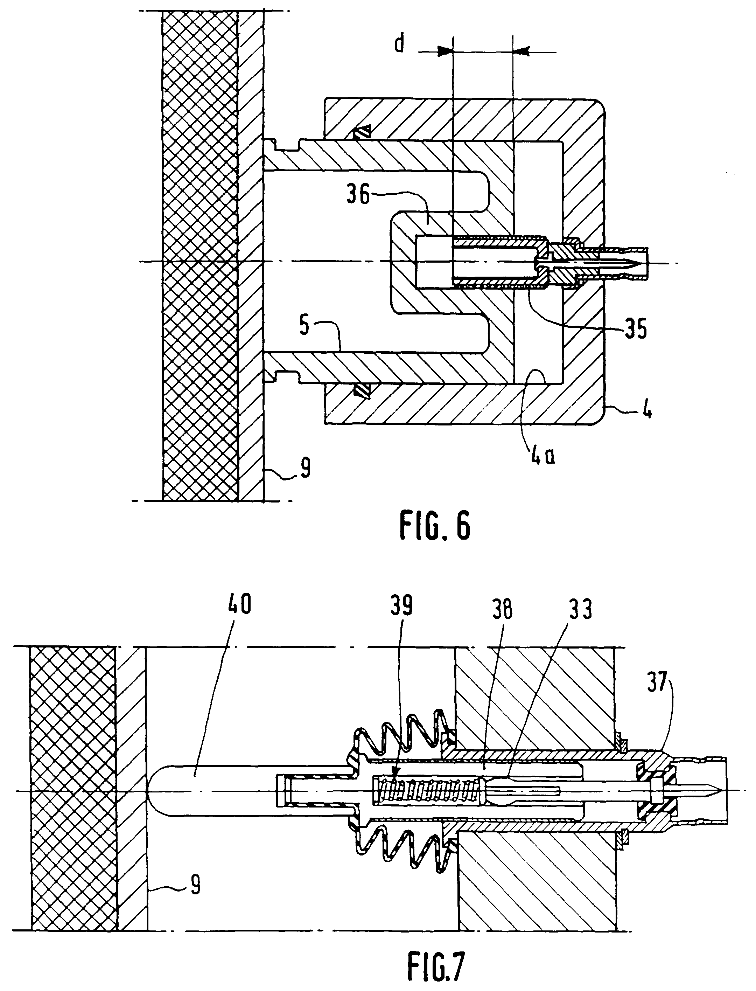

La figure 6 montre une autre variante de réalisation possible du capteur capacitif, utilisable simultanément avec celles des figures 4 et 5 et dans laquelle l'une des électrodes du capteur capacitif comprend une électrode axiale 35 solidaire du cylindre 4, tandis que l'autre électrode comprend un manchon 36 solidaire du piston 5, par exemple formé par ce dernier et guidé sur l'électrode axiale 35.

La figure 7 montre encore une autre variante de réalisation possible du capteur capacitif, utilisable simultanément avec celles des figures 4, 5 et 6, et dans laquelle l'une des électrodes du capteur capacitif est formée par un manchon 37 solidaire de la chape ou de l'étrier, l'autre électrode comprenant un coulisseau 38 isolé du manchon 37, guidé par lui et poussé par un ressort 39 vers un patin de friction 9 sur lequel il appuie au moyen d'un palpeur 40.

Comme le comprendra aisément l'homme de l'art à la lecture de la présente description, le circuit électronique 18 peut être monté à proximité des contacts de sortie dans tous les modes de réalisation présentés, et notamment illustrés aux figures 5, 6 et 7, conformément à l'enseignement de la figure 4.

## Revendications

1. Frein à disque pour véhicule à moteur, comprenant :
- deux éléments de frein mobiles l'un par rapport à l'autre, dont l'un est un étrier (1) chevauchant un disque de frein (2), et dont l'autre est une chape (3) fixée au véhicule;
- des moyens de serrage comprenant un cylindre (4) solidaire de l'étrier et présentant en regard du disque une ouverture fermée par un piston (5);
- des moyens de guidage permettant un coulissement de l'étrier par rapport à la chape lors d'un actionnement des moyens de serrage, ces moyens de guidage comprenant au moins une colonnette de guidage (6) fixée à l'un des éléments de frein, et un alésage (8) formé dans l'autre élément de frein et dans lequel coulisse la colonnette;
- deux patins de friction (9, 10) dont le premier est disposé entre le piston et une première face (2a) du disque, et le second entre une seconde face (2b) du disque et une mâchoire (la) de l'étrier, ces patins étant appliqués sur le disque lors de l'actionnement des moyens de serrage; et
- au moins un indicateur d'usure électrique pour surveiller l'état d'usure de l'un au moins des patins, cet indicateur comportant deux parties (3, 6; 35, 36) dont l'une au moins est déplacée par rapport à l'autre lors de l'actionnement des moyens de serrage, et comprenant des moyens (12, 13, 15, 33, 34) pour faire varier un paramètre électrique, de façon sensiblement continue, en fonction de la position relative occupée par les première et seconde parties de cet indicateur,
caractérisé en ce que l'indicateur d'usure comprend un capteur capacitif à deux électrodes (3, 6; 35, 36), chacune des parties de cet indicateur constituant une électrode correspondante de ce capteur, en ce que l'une des électrodes du capteur capacitif est montée coulissante dans l'autre, ces électrodes participant à la constitution desdits moyens de guidage et présentant une zone de recouvrement variable (d), et en ce que ce frein comprend en outre et des moyens de surveillance (18, 27, 31) propres à mesurer périodiquement le paramètre électrique, à en comparer la valeur à au moins un seuil prédéterminé, et à délivrer un signal de défaillance lorsque le résultat de la comparaison est différent d'un résultat normal préalablement enregistré.

2. Frein à disque suivant la revendication 1, caractérisé en ce que les moyens de surveillance comprennent un circuit électronique (18) sensible à la capacité entre les deux électrodes, solidaire de l'une des parties de l'indicateur et propre à produire, en tant que signal de sortie, un signal modulé au cours du temps en fonction de la valeur de la capacité (C1) formée entre les électrodes du capteur.

3. Frein à disque suivant la revendication 2, caractérisé en ce que le circuit électronique produit, en tant que signal de sortie, une modulation d'un signal d'energie électrique qu'il reçoit en provenance d'une source d'alimentation (27).

4. Frein à disque suivant l'une quelconque des revendications précédentes, caractérisé en ce que l'une des électrodes de l'indicateur d'usure comprend ladite colonnette (6).

5. Frein à disque suivant l'une quelconque des revendications précédentes, caractérisé en ce que l'une des électrodes de l'indicateur d'usure comprend une électrode axiale (35) solidaire du cylindre (4), l'autre électrode comprenant un manchon (36) solidaire du piston (5).

## Patentansprüche

1. Scheibenbremse für ein Kraftfahrzeug, mit:
- zwei relativ zueinander beweglichen Bremselementen, von denen eines ein eine Bremsscheibe (2) umgreifender Bremssattel (1) ist und das andere ein am Fahrzeug befestigter Bügel (3) ist,
- Spannmitteln, die einen fest mit dem Bremssattel verbundenen Zylinder (4) enthalten und gegenüber der Scheibe eine von einem Kolben (5) verschlossene Öffnung aufweisen,
- Führungsmitteln, die ein Verschieben des Bremssattels bezüglich des Bügels bei einer Betätigung der Spannmittel ermöglichen, wobei diese Führungsmittel wenigstens eine Führungsstange (6) aufweisen, die an einem der Bremselemente befestigt ist, und eine Bohrung (8), die in dem anderen Bremselement ausgebildet ist und in der die Stange gleitet,
- zwei Reibbelägen (9, 10), von denen der erste zwischen dem Kolben und einer ersten Seite (2a) der Scheibe und der zweite zwischen einer zweiten Seite (2b) der Scheibe und einer Backe (la) des Bremssattels angeordnet ist, wobei diese Beläge bei der Betätigung der Spannmittel an die Scheibe angelegt werden, und
- wenigstens einer elektrischen Verschleißanzeigevorrichtung, um den Verschleißzustand von wenigstens einem der Beläge zu überwachen, wobei diese Anzeige zwei Abschnitte (3, 6; 35, 36) aufweist, von denen wenigstens einer bezüglich des anderen bei der Betätigung der Spannmittel verstellt wird, und Mittel (12, 13, 15, 33, 34) enthält, um einen elektrischen Parameter in im wesentlichen kontinuierlicher Weise in Abhängigkeit von der Relativstellung zu ändern, die von dem ersten und dem zweiten Abschnitt der Vorrichtung eingenommen wird,
dadurch gekennzeichnet, daß die Verschleißanzeige einen kapazitiven Aufnehmer mit zwei Elektroden (3, 6; 35, 36) enthält, wobei jeder der Abschnitte dieser Anzeigevorrichtung eine entsprechende Elektrode des Aufnehmers bildet, daß eine der Elektroden des kapazitiven Aufnehmers verschiebbar in der anderen angebracht ist, wobei die Elektroden Teil der Führungsmittel sind und eine variable Überdeckungszone (d) aufweisen, und daß die Bremse außerdem Überwachungsmittel (18, 27, 31) aufweist, die in der Lage sind, den elektrischen Parameter periodisch zu messen, dessen Wert mit wenigstens einer vorbestimmten Schwelle zu vergleichen und ein Ausfallsignal zu liefern, wenn das Ergebnis des Vergleiches sich von einem vorher gespeicherten normalen Ergebnis unterscheidet.

2. Scheibenbremse nach Anspruch 1, dadurch gekennzeichnet, daß die Überwachungsmittel eine elektronische Schaltung (18) aufweisen, die für die Kapazität zwischen den beiden Elektroden empfindlich ist, fest mit einem der Abschnitte der Anzeigevorrichtung verbunden ist und als Ausgangssignal ein Signal erzeugt, das über der Zeit in Abhängigkeit von dem Wert (C1) der Kapazität moduliert ist, die zwischen den Elektroden des Aufnehmers gebildet ist.

3. Scheibenbremse nach Anspruch 2, dadurch gekennzeichnet, daß die elektronische Schaltung als Ausgangssignal eine Modulation eines elektrischen Energiesignals erzeugt, das sie von einer Versorgungsquelle (27) empfängt.

4. Scheibenbremse nach einem der vorhergehenden Ansprüche, dadurch gekennzeichnet, daß eine der Elektroden der Verschleißanzeigevorrichtung die Stange (6) enthält.

5. Scheibenbremse nach einem der vorhergehenden Ansprüche, dadurch gekennzeichnet, daß eine der Elektroden der Verschleißanzeigevorrichtung eine fest mit dem Zylinder (4) verbundene axiale Elektrode (35) aufweist, wobei die andere Elektrode eine fest mit dem Kolben (5) verbundene Buchse aufweist.

## Claims

1. Disk brake for a motor vehicle, comprising:
- two brake elements which can move with respect to one another, one of which is a caliper (1) straddling a brake disk (2), and the other of which is a carrier (3) fixed to the vehicle;
- clamping means comprising a cylinder (4) secured to the caliper and, facing the disk, having an opening which is closed by a piston (5);
- guide means allowing the caliper to slide with respect to the carrier when the clamping means are actuated, these guide means comprising at least one guide pin (6) fitted to one of the brake elements, and a bore (8) formed in the other brake element and in which the guide pin slides;
- two friction pads (9, 10), the first of which is located between the piston and a first face (2a) of the disk, and the second of which is located between a second face (2b) of the disk and a jaw (la) of the caliper, these pads being applied to the disk when the clamping means are actuated; and
- at least one electrical wear indicator for monitoring the state of wear of at least one of the pads, this indicator including two parts (3, 6; 35, 36) at least one of which is displaced with respect to the other when the clamping means are actuated, and comprising means (12, 13, 15, 33, 34) for varying an electrical parameter substantially continuously, as a function of the relative position occupied by the first and second parts of this indicator,
characterized in that the wear indicator comprises a capacitive sensor having two electrodes (3, 6; 35, 36) each of the parts of this indicator constituting a corresponding electrode of this sensor, in that one of the electrodes of the capacitive sensor is mounted so that it can slide in the other, these electrodes participating in forming the said guide means and having a variable overlap area (d), and in that this brake further comprises monitoring means (18, 27, 31) capable of periodically measuring this parameter, of comparing its value to at least one predetermined threshold, and of delivering a failure signal when the result of the comparison differs from a previously recorded normal result.

2. Disk brake according to Claim 1, characterized in that the monitoring means comprise an electronic circuit (18) which is sensitive to the capacitance between the two electrodes, secured to one of the parts of the indicator and capable of producing, as an output signal, a signal which is modulated over time as a function of the value of the capacitance (C1) formed between the electrodes of the sensor.

3. Disk brake according to Claim 2, characterized in that the electronic circuit produces, as an output signal, a modulation of an electrical energy signal which it receives coming from a power source (27).

4. Disk brake according to any one of the preceding claims characterized in that one of the electrodes of the wear indicator comprises the said guide pin (6).

5. Disk brake according to any one of the preceding claims characterized in that one of the electrodes of the wear indicator comprises an axial electrode (35) secured to the cylinder (4), the other electrode comprising a sleeve (36) secured to the piston (5).
